# EUROPEAN PATENT SPECIFICATION

(11) **EP 2 526 015 B1**
(45) Date of publication and mention of the grant of the patent: **01.05.2019**
(21) Application number: 11734940.7
(22) Date of filing: 20.01.2011
(51) Int. Cl.: B63B 25/24, B60P 7/08, B63B 25/28

(54) **ANCHOR POINT**
ANKERPUNKT
POINT D'ANCRAGE

(30) Priority: 22.01.2010 SE 1050072
(43) Date of publication of application: 28.11.2012
(73) Proprietor: Cargotec Sweden AB, 400 40 Göteborg (SE)
(72) Inventor: PETERSSON, Thomas, S-411 35 Göteborg (SE)
(74) Representative: Zacco Sweden AB
(86) International application number: PCT/SE2011/050060
(87) International publication number: WO 2011/090430

(56) References cited:
- EP-A1- 1 609 717
- WO-A1-2006/121398
- WO-A1-2009/132390
- DE-A1- 4 226 886
- US-A- 4 762 449
- US-A- 4 948 311
- US-B1- 6 764 259

## Description

### TECHNICAL FIELD

This invention relates to an anchor point suitable for lashing down vehicles onboard ships.

### BACKGROUND ART

When transporting goods with ships, for secure shipping, the goods must be safely secured on deck, such that it stays in place even in rough seas. The goods are secured with posts, braces, ropes, cable and the like, that tie down the goods on to anchor points. These anchor points are provided on the deck and on the walls of the ship. Especially car decks are commonly provided with decks comprising of wooden boards arranged on a carrying steel structure. For these decks the anchor points can be provided either in the steel structure or in the wooden boards. The anchor points provided in the wooden boards are commonly screwed in the wooden board. Thereby are several mounting steps (boring, screwing, fitting) and several parts (screws, bricks, nuts) involved. Therefore it is wished for a simplified system to provide the wooden boards with anchor points.

US 6 106 206 discloses a lashing device integrated in truck superstructure walls, which has a plurality of lashing cups arranged next to each other. Each lashing cup has a truncated cone shape which tapers towards the cup bottom, can be form-fitted into corresponding recesses of the walls and fixed therein with an adhesive. Each lashing cup has a strip located inside and at the centre of the lashing cup, and an outer flange that extends parallel to the cup bottom around the open cup side. These lashing cups are glued on to the wooden board and are simpler to mount and require fewer parts than the above mentioned anchor points. Still, the gluing of the cups is considered not sufficient in the demanding surroundings of a car deck, because the forces applied on the anchor points are greater here.

Other anchor points such as the one disclosed in US 476 24 49 A comprises a lashing plate and an axial fixing plate, attached to one another through a through hole in a surface. The plates are attached with attaching means, i.e. screws and bolts. When a lashing hook is received in the lashing plate and a lashing force is applied to the anchor point, the axial fixing plate, the attaching means is exposed to the forces applied by the lashing hook. If such an anchor point is used in an environment such as a deck of a ship, all the components of the anchor point, i.e. the lashing plate, the axial fixing means and the attaching means must be made of materials resisting the high lashing loads. Obviously, materials resisting high stress and loads are more expensive than materials not having these properties.

### SUMMARY OF THE INVENTION

It is the object of the invention to suggest a simple and inexpensive anchor point to be mounted into a board of deck of a ship and which can resist high loads and preferably have few parts and can easily be mounted and demounted.

The invention is based upon the idea, that the structural component that is receiving a lashing hook, shall distribute the load from the lashing hook to the deck of the ship. The load on both the attachment means and the axial fixing means is thereby significantly reduced, and these components can be made of less expensive materials, which resist lower loads.

The object is achieved by the features of independent claim 1. The anchor point displays a lashing side adapted to face the goods to be lashed down, and a back side opposite to the lashing side. When the anchor point is in use it will essentially be exposed to a force directed out from the lashing side of the anchor point, i.e. a pulling force from the lashing hook received in the anchor point.

The anchor point comprises an essentially circular lashing plate and an axial fixing means. The lashing plate is provided with a flange which is at least partially protruding outside an edge of the essentially circular through hole. Further, the lashing plate is provided with an opening in which a lashing hook can be arranged. The opening is adapted to receive a lashing hook from the lashing side of the anchor point. The axial fixing means is adapted to be mechanical attached to the lashing plate through the through hole.

When the anchor plate is mounted, an outer edge of the axial fixing means is at least partially protruding outside the periphery of the through hole. Said outer edge of the axial fixing means and the flange of the lashing plate are adapted to be mounted on opposite sides of said board, such that when mounted, the lashing plate and the axial fixing means are mechanically attached through the through hole and thereby the anchor point is axially fixed in the board. Commonly, the board is a wooden board, such as a plywood board or any other kind of suitable wood based board, the invention is however not limited thereto.

The flange is adapted to protrude outside the edge of the essentially circular through hole, at the back side of the anchor point, and the outer edge of the axial fixing means is adapted to protrude outside the edge of the essentially circular through hole, at the lashing side of the anchor point.

Thereby, when the anchor point is exposed to a pulling force from a lashing hook received in the opening of the lashing plate, just the lashing plate is exposed to load, which is transmits the force directly to the board in which the anchor point is mounted over the flange of the lashing plate. The axial fixing means is not exposed to the load from the lashing hook. The axial fixing means can thereby be made in a material with lower structural strength than the lashing plate, further neither the stress sensitive mechanical connection between the lashing plate and the axial fixing means is exposed to the lashing forces. Hence, also the mechanical attachment means between the lashing plate and the axial fixing means can be made in a less robust way and material.

The inventive anchor point provides secure mounting in a board of a car deck of a ship, due to it self securing construction. The flange of the lashing plate which at least partially protrudes outside the outer periphery of the through hole in the board, secures the anchor point in a first axial direction. The lashing plate is mechanically attached to axial fixing means through the through hole, and because an outer edge of said axial fixing means, also at least partially protruding outside the periphery of the through hole, the axial fixing means secures the anchor point in a second axial direction. In the radial direction the anchor point is surrounded of the board. Through an exact fitting of the anchor point in the through hole, the anchor point can be tightly fitted in its radial direction.

The board in which the anchor point is to be mounted obviously has a thickness and if the lashing plate is flat, the opening of the lashing plate will be located below the surface with the goods to be lashed down. Therefore it is suggested that the lashing plate is cup shaped, such that said opening is arranged on the surface of the lashing side of the anchor point. This achieves an easy access to the opening in the lashing plate from the lashing side of the anchor point. The cup shape of the lashing plate, results in that the lashing plate is provided with a side wall extending between the back side and the lashing side of the anchor point.

The height of the side wall is adapted to and essentially equal to the thickness of the board. Such a lashing plate will thereby have a height larger than its thickness. The side wall of the lashing plate is adapted to be essentially parallel with the side wall of the through hole, i.e. parallel with the through hole. Thereby radial forces - from for example a lashing hook hooked into the lashing hole - are transferred from the lashing hook to the lashing plate and spread along the side wall of the lashing plate and further to the side wall of the through hole in the board. The circular shape of the through hole and the lashing plate contributes to an even spread of the radial forces.

The axial fixing means can be design in numerous ways. In an embodiment the axial fixing means is designed as an attachment plate. The lashing plate and the attachment plate are mechanically attached with one another with attaching means, such that when the anchor point is mounted in the board, the anchor point is secured in the through hole and the lashing plate, and thereby are the attachment plate and the lashing plate stationary relative each other. There are numerous known suitable attaching means, such as screws and bolts, soldering, welding, press or form fitting, which all are possible for the inventive anchor point.

An advantageous attaching means is detachable attaching means, and especially a bayonet mount. The bayonet mount can either be a radial bayonet mount or an axial bayonet mount. If a radial bayonet mount is used, the attachment plate also has to have a side wall protruding essentially perpendicular from its surface, and thereby parallel to with the side walls of the lashing plate and the through hole. The radial bayonet mount is than located on the side walls of the lashing plate and the attachment plate. The female respective the male part of the bayonet mount can be located on either the lashing plate or the attachment plate. An obvious advantage of using a bayonet mount for attaching the lashing plate and the attachment plate with each other is that mounting of the anchor point in a board is easily made and can be performed without any additional parts or tools. Further, the anchor point can, if necessary, easily be removed from the board. The use of a bayonet mount is enabled due to the inventive design of the anchor point, which reduces the load on the attachment means.

In another advantageous embodiment the plate, with the female part of the bayonet mount, is provided with slots in both rotational directions. With such a construction can the slots in respectively rotational direction be provided for different thicknesses of the board, such that a slot in a first rotational direction is to mount the anchor point on a board with a first thickness, for example 22 mm and the mounting slots in a second rotational direction is to mount the anchor point on a board with a second thickness, for example 24 mm.

Alternative to the radial bayonet mount, can an axial bayonet mount be used. The female respectively the male part of the bayonet mount, is than arranged on the surfaces of the lashing plate and the attachment plate which faces each other. To achieve an adaption of an anchor point with an axial bayonet mount to different thicknesses of the board, bricks could be used.

A bayonet mount is normally self securing, due to the shape of the slots of the female part and a spring force holding the male part in its correct position. Due to extern forces on the anchor point, it could come to the situation that this spring force is overcome. Thereby, it is suggested, as an option for both the radial and axial bayonet mount, to complement the bayonet mount with a fixing plug. The fixing plug could be a simple cylindrical plug arranged such that it connects the lashing plate and the attachment plate in the rotational direction relative each other. The fixing plug can be arranged in a hole in the lashing plate and the attachment plate.

As an alternative to a detachable attaching means, between the lashing plate and the attachment plate, a permanent attaching means can be used. The attaching means is thereby a permanent. Such attaching means could be soldering or welding.
The lashing plate must be made out of a material resistant to hard ware, since the working surroundings for the anchor point is tough. The lashing plate will be exposed to the highest tear stress, because of the lashing hook that can be lashed into it. The lashing plate is a metal, wherein iron, an iron alloy or a light weight metal can be used. The lashing plate can optionally also be made of a suitable plastic material.

The attachment plate is made of a plastic material or a metal. The stress on the attachment plate is lower in comparison with the lashing plate; therefore the material requirements on the attachment plate are lower.
The anchor point according to any embodiment of the invention can have a through opening in different shapes, wherein a circular opening or a clover leaf opening is preferable. These are two common openings for anchor points, and thereby can existing lashing gear be used together with the inventive anchor points.

A rotational fixing means fixing the anchor point against rotation in the through hole in the board could be used together with all embodiments of the anchor point.

An alternative anchor point is provided with an attachment plate made in one piece with the lashing plate, i.e. through moulding or other suitable production method, wherein then the mounting of the anchor point by arranging the lashing plate and the attachment plate from different sides of the board and then attach them with one another with the attaching means is not possible.

To enable an easier mounting of an anchor plate, with a permanent attaching means between the lashing plate and the attachment plate, it is suggested that the attachment plate is provided with tongues protruding it its radial direction. The tongues form the outer edge of the attachment plate, such that the tongues protrude outside the outer periphery of the through hole in the board. To allow a mounting in the through hole in the board, the through hole is provided with sockets protruding out from the otherwise essentially circular through hole. The sockets show a corresponding geometry as the tongues on the attachment plate, wherein the sockets are slightly larger, such that the tongues can be guided through the corresponding sockets. The anchor point with the lashing plate and the attachment plate already attached to each other could then be mounted in the board from above. As the tongues has passed the sockets and the flange of the lashing plate is resting on the board, the anchor point can be rotated, such that the tongues are located above/beneath a part of the through hole periphery, that does not have any sockets and the anchor point is thereby axial secured in the board. Optionally the anchor point could be secured against rotation with a screw or the like.

Another alternative anchor point is provided with spring like axial fixing means. The spring is mounted on the inside of the side wall of the lashing plate and has tongues protruding in the lashing plates radial direction, such that the tongues form the outer edge of the axial fixing means. Further, the lashing plate thereby has openings in its side wall, such that the tongues of the spring can protrude out of theses openings. The spring force is directed in the radial direction of the lashing plate, such that when the anchor point is mounted the spring force pushes the tongues outside of the outer periphery of the through hole. The tongues have such a shape that they are pushed inside the side wall of the lashing plate if a force is applied from beneath. An anchor point with a spring as axial fixing means can be mounted from the upper side of the board.

Preferably is the lashing plate for all embodiments of the anchor point according to the invention circular.

The invention is described in further detail below by way of embodiments illustrated in the drawings.

### BRIEF DESCRIPTION OF THE DRAWINGS

In the drawings are shown:
Figure 1a shows an anchor point with a radial bayonet mount, from above.
Figure 1b shows a cut away drawing of the anchor point in figure 1a, mounted in a board.
Figure 2a shows an anchor point with an axial bayonet mount, from beneath.
Figure 2b shoes a cut away drawing of the anchor point in figure 2a mounted in a board.
Figure 3a shows an anchor point with a permanent attachment plate, from beneath.
Figure 3b shows a cut away drawing of the anchor point in figure 3a mounted in a board.
Figure 4a shows an anchor point with a spring as a radial fixing means.
Figure 4b shows a cut away drawing of the anchor point in figure 4a mounted in a board.
Figure 5 shows an anchor point with a clover leaf opening from above.

### DETAILED DESCRIPTION

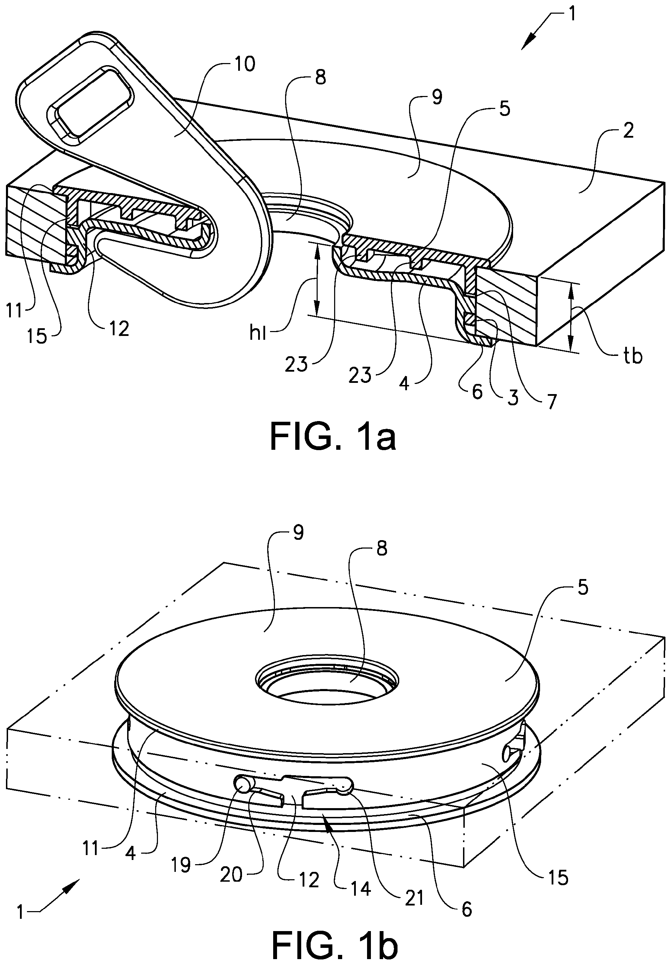

The figures 1 to 5 shows different embodiments an anchor point 1. For all embodiments the anchor point can be secured in a through hole 3 in a board 2 by an outer flange 6, 106, 206, 306 of a lashing plate 4, 104, 204, 304, 404 and an axial fixing means 5, 105, 205, 305 adapted to be mechanically attached to the lashing plate 4 through attaching means 14, 114. It is preferred, that the anchor point 1 is essentially circular, and thereby is a suitable through hole 3 also essentially circular. Both the outer flange 6, 106, 206, 306 and an outer edge 11, 111, 211, 311 of the axial fixing means 5, 105, 205, 305 are adapted to have a diameter wider than the diameter of the through hole 3 in the board. When the anchor point 1 is mounted in the through hole 3, the lashing plate 4, 104, 204, 304 and the axial fixing means 5, 105, 205, 305 are situated on opposite sides of the board 2, and thereby axially secured in the board 2.

Preferably, the anchor point 1 is adapted such that the distance between the protruding outer flange 6, 106, 206, 306 and the outer edge 11, 111, 211, 311 of the axial fixing means 5, 105, 205, 305 is essentially equal to the thickness tb of the board. Thereby, it will not be any axial play between the anchor point 1 and the board 2.

In the figures 1-4a an anchor point 1 mounted in a board is shown in a cut away cutting. In the figures 1-4b and 5 an anchor point 1 is shown in a perspective view.

For the anchor point 1, according to the embodiment in figure 1a and 1b, the lashing plate 4 and the attachment plate 5 are attached with each other such that the attachment plate 5 forms the top of the anchor point 1. Still, the lashing plate 4 has a side wall 12 and thereby shows a height hi, such that it essentially corresponds to the thickness of the board 2.

A lashing hook 10 can be hooked in an opening 8 in the lashing plate 4, wherein the opening 8 is located such that, it essentially levels with the surface 9 of the attachment plate 5. The attachment plate 5 has a corresponding opening, through which the opening 8 of the lashing plate can protrude. A lashing hook 10 hooked is in the anchor point 1, i.e. hooked into the lashing plate 4. Forces applied to the anchor point 1 through the lashing hook 10 are transferred from the lashing plate 4 over the flange 6 and over a side wall 15 of the attachment plate to the board 2 and is spread along the periphery 7 of the through whole 3. The attachment plate 5 is thereby not subjected to any hard ware from the lashing hook 10 and can, if desired, be made of a cheaper material with lower strength then the lashing plate 5. On the underside, i.e. the side towards the lashing plate 104, of the attachment plate 5 support ribs 23 is adapted. The support ribs 23 contribute to a structural strength of the attachment plate 105.

In the embodiment of figure 1a and 1b the attaching means is a radial bayonet mount 14. The radial bayonet mount 14, is best seen in figure 1b, and comprises a female part with two slots 20, 21 on the attachment plate 5 and a male part with a pin 19 on the lashing plate, wherein both the female and the male part is located on the side walls 12, 15 of respective plate 4, 5. Because of the two slots 20, 21 of the female part is directed in opposite rotational directions and at different depths, the bayonet mount 14 is adapted such that the anchor point 1 can be mounted on boards 2 with different thickness. Obviously, the female and male part of the bayonet mount 14 can also be located on the other side wall 12, 15 of the respective plate 4, 5. Due to the inventive design of the anchor point, the attaching means, i.e. the bayonet mount 14 is not subjected to any of the lashing forces, applied on the lashing plate 4.

To mount the anchor point 1 in the board 2, the lashing plate 4 and the attachment plate 5 are attached with each other through the through hole 3, whereby the lashing and the attachment plate 4, 5 is brought in from opposite sides of the board 2. The pin 19 of the bayonet mounts 14 male part is guided into the female part, wherein by rotating the two plates 4, 5 in opposite directions the bayonet mount 14 locks the anchor plate 1 to the board 3. In the figure 1b the left slot 20 is adapted to mount the anchor point 1 on a thicker board 2, than the right slot 21.

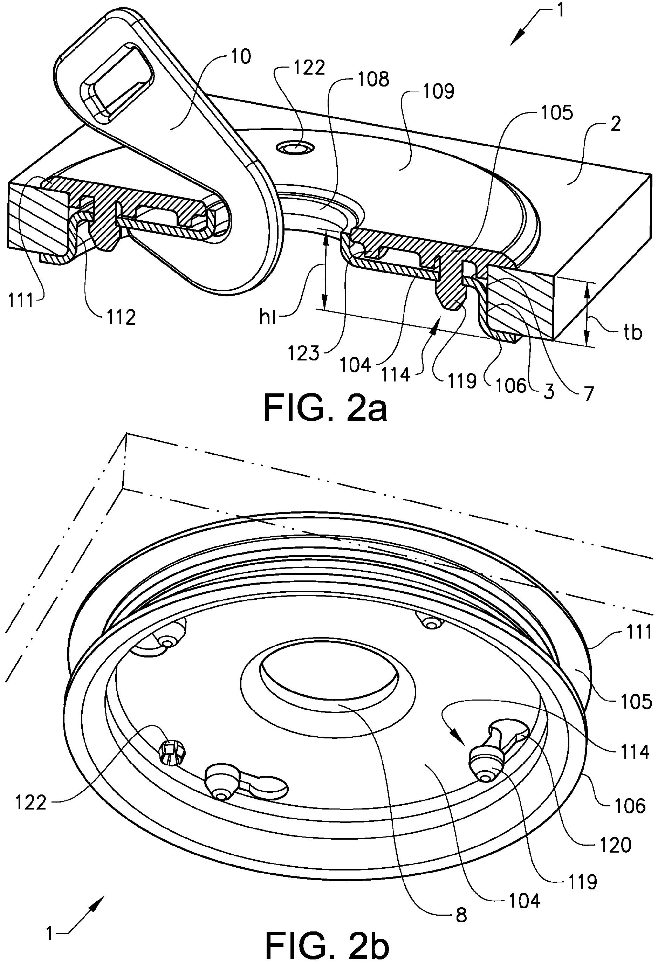

Another embodiment of the inventive anchor point 1 is shown in figure 2a and 2b, wherein the embodiments of figure 2 differs from the embodiment in figure 1 in that, that the attaching means is an axial bayonet mount 114. Hence, the female and male parts of the bayonet mounts are located on the upper side of the lashing plate 104 and the underside of the attachment plate 105. Thereby is it not necessary for the attachment plate 105 to have a side wall. The forces applied on the lashing plate is transferred directly from the side wall 112 of the lashing plate 104 to the outer periphery 7 of the through hole 3. The attachment plate 105 has, on it's under side, i.e. the side towards the lashing plate 104, support ribs 123 which contributes to a structural strength of the attachment plate 105. Preferably is the male part of the bayonet mount 114 located on the attachment plate 105 and the slot 120 of the female part of the bayonet mount 114 located on the lashing plate 104.

In the embodiment of the invention according to figure 2a and 2b a fixing plug 122 fixes the lashing and the attachment plate 104, 105 relative each other, such that after applying of the fixing plug 122, the two plates 104, 105 can not be rotated relative each other. Even, if not shown a corresponding plug could also be used in the embodiment according to figure 1a and 1b.

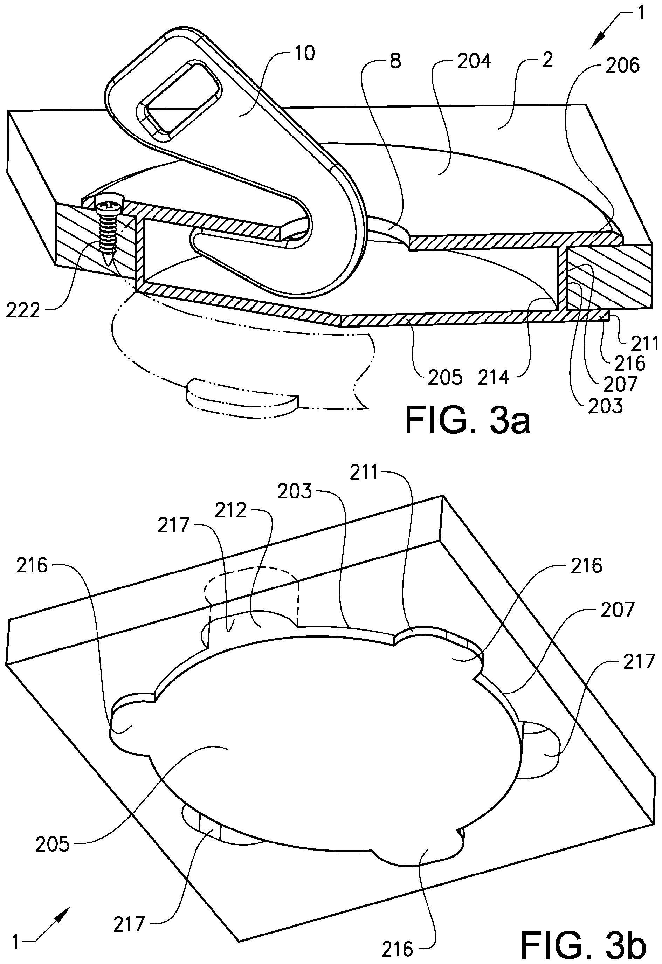

In the anchor point according to figure 3a and 3b the lashing plate 204 is arranged on the upper side of the anchor point 1, wherein the upper side is the side from which the lashing hook 10 is hook into the anchor point 1. The attaching means is a permanent attaching means 214, such as a welded seam or a soldered seam, whereby after appliance of the attaching means 214 the lashing plate 204 and the attachment plate 205, is permanently attached to each other. The lashing and the attachment plate 204, 205 can even be integrally formed such that they are made of one piece of material. A welding seam or a soldering seam 214 forms the attaching means, at the transition from the side wall 212 of the lashing plate 204 to the attachment plate 205. Forces applied to the lashing plate 204 through a lashing hook 10 are transferred over the side wall 212 to the circular periphery 307 of the through hole 203.

Tongues 216 protrude radial from the attachment plate 205; such that the tongues 216 forms the outer edge 211 of the attachment plate 205. To mount the anchor point 1 in the board 2, sockets 217 is provided in the through hole 303. The tongues 216 of the attachment plate 205 are thereby guided through the sockets 217 and as the tongues 216 are fully through, the attachment plate 205 is rotated such that the tongues 216 protrude outside the main periphery 207 of the through hole 203. The main periphery 207 is the circular part of the through hole 203, from which the sockets protrude.

Further, a fixing screw 222 fixes the lashing plate 205 against rotation relative the board 2. The fixing screw 222 is driven en through a hole in the lashing plate 204 and down into the board 2.

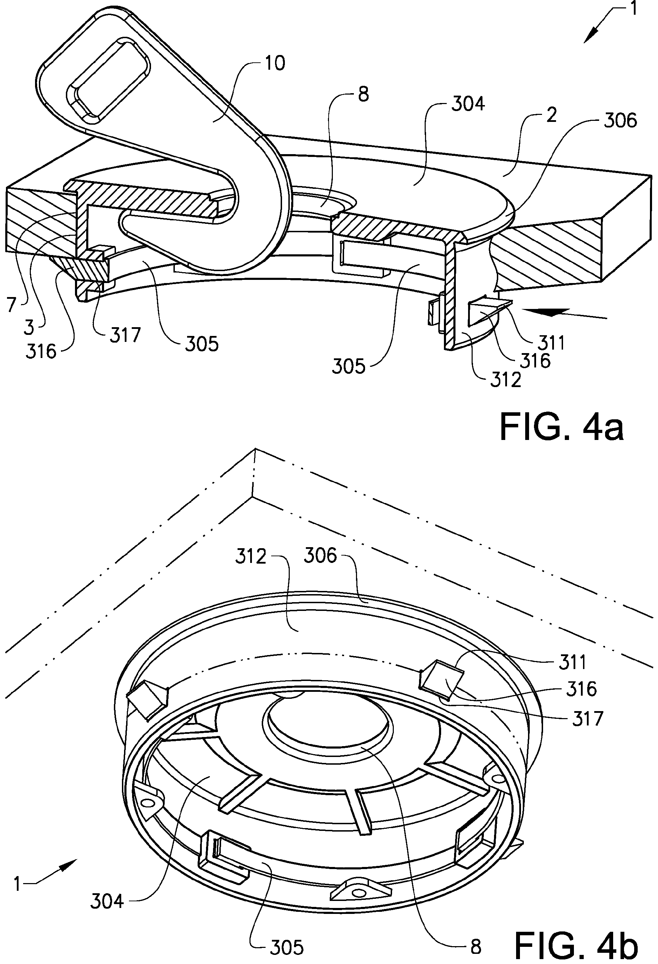

As for the anchor point according to fig. 3a and b, the lashing plate 304 in the embodiment according to figure 4a and 4b is arranged on the lashing side of the anchor point 1, wherein the lashing side is the side from which the lashing hook 10 is hook into the anchor point 1.

The axial fixing means in the anchor point according to figure 4a and 4b is a spring 305. The spring 305 is arranged on the inside of the sidewall 312 of the lashing plate 304. Further, the spring 305 is provided with tongues 316 protruding in the radial direction. The tongues 316 protrude out through openings 317, in the sidewall 312 of the lashing plate 312. The tongues 316 have a wedge shaped form, such that when anchor plate 1 is pushed through the through hole 3 in the board 2, the tongues 316 are pushed in the radial direction, such that the side wall 312 of the lashing plate 304 can pass through the through hole 3. As the tongues 316 have past the whole through hole 3 the spring force pushes the tongues 316 in the radial direction, such that their outer edge 311 protrude outside the periphery 7 of the through hole 3.

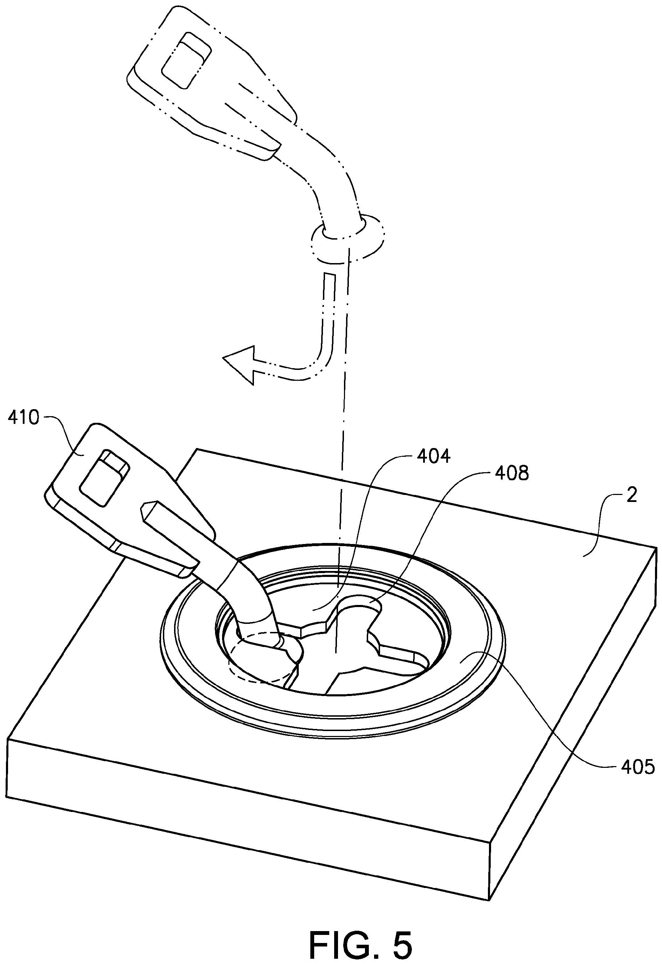

In figure 5 is an alternative form of the opening in the lashing plate 4, 104, 204, 304 shown. The opening 408 is clover leaf shaped. The clover leaf shaped opening 304 is adapted to receive bulb hook 410 which are common onboard ships. All the embodiments of the present invention can be arranged with either a round lashing opening 8 or a clover leaf shaped lashing opening 408.

## Claims

1. Anchor point (1), for lashing down goods, such as vehicles, onboard ships, wherein the anchor point (1) is adapted to be mounted in an essentially circular through hole (3) in a board (2),
and the anchor point (1) comprises;
• a lashing side adapted to face the goods to be lashed down, and
• a back side opposite to the lashing side, wherein
the anchor point (1) further comprises;
• an essentially circular lashing plate (4, 104), and
• axial fixing means (5, 105),
wherein the lashing plate (4, 104) is provided with;
• an opening (8, 108, 408), adapted to receive a lashing hook (10, 30), and
• a flange (6, 106), which is at least partially protruding outside an edge (7) of the essentially circular through hole (3),
and wherein the axial fixing means (5, 105) is adapted to be mechanical attached with the lashing plate (4, 104) through the through hole (3), and at least an outer edge (11, 111) of the axial fixing means (5, 105) is adapted to at least partially protruding outside the edge (7) of the essentially circular the through hole (3), wherein
• the flange (6, 106) is adapted to protrude, outside an edge (7) of the essentially circular through hole (3), at the back side of the anchor point (1), and
• the outer edge of the axial fixing means (5, 105) is adapted to protrude, outside the edge (7) of the essentially circular the through hole (3), at the lashing side of the anchor point (1),
wherein the lashing plate (4, 104) is cup shaped, such that said opening (8, 108, 408) is arranged on the lashing side of the anchor point (1) and the lashing plate (4, 104) is provided with a side wall (12, 112, 212) extending between the back side and the lashing side of the anchor point (1).

2. Anchor point (1) according to claim 1, wherein a height (hl) of said side wall (12, 112) is essentially equal to the thickness (tb) of the board (2) and wherein said side wall (12, 112) of the lashing plate (4, 104) is essentially parallel with a wall of the through hole (3).

3. Anchor point (1) according to any of the preceding claims, wherein the axial fixing means is an attachment plate (5, 105) and the lashing plate (4, 104) and the attachment plate (5, 105) can be mechanically attached with one another with attaching means (14, 114), such that when the anchor point (1) is mounted in the board (2), the anchor point (1) is secured in the through hole (3) and the lashing plate (4, 104, 204) and the attachment plate (5, 105) are stationary relative each other.

4. Anchor point (1) according to claims 3, wherein the attaching means is a bayonet mount (14, 114), and wherein the bayonet mount is a radial bayonet mount (14) or an axial bayonet mount (114).

5. Anchor point (1) according to claim 3, wherein also the attachment plate (5, 105) is provided with at least one side wall (15) adapted to be parallel with the side wall (12) of the lashing plate (4), and wherein the attaching means is a radial bayonet mount (14) located on the side walls (12, 15) of the lashing plate (4) and the attachment plate (5) respectively.

6. Anchor point (1) according to claim 5, wherein the lashing plate (4) with the female part of the bayonet mount (14) is provided with slots (20, 21) in both rotational directions, whereby the slots (20) in a first rotational direction is to mount the anchor point (1) on a board (2) with a first thickness and the mounting slots (21) in a second rotational direction is to mount the anchor point (1) on a board (2) with a second thickness.

7. Anchor point (1) according to any of the claims 3 - 6, wherein a fixing plug (122) is mounted to fix the position of the lashing plate (104) and the attachment plate (105) relative each other.

8. Anchor point (1) according to any of the preceding claims, wherein the lashing plate (4, 104) is made of metal, especially iron or an iron alloy.

9. Anchor point (1) according to claim 8, wherein the axial fixing means (5, 105) is made of a material with a lower structural strength than the material of the lashing plate (4, 104).

10. Anchor point (1) according to any of the preceding claims, wherein the opening in the lashing plate is a circular opening (8) or a clover leaf opening (28).

11. Anchor point (1) according to any of the preceding claims, wherein a rotational fixing means (222) secures the anchor point (1) from rotation relative the board (2).

## Patentansprüche

1. Ankerpunkt (1), zur Niederzurrung von Gegenständen, wie beispielsweise Fahrzeugen, an Bord von Schiffen, wobei der Ankerpunkt (1) ausgelegt ist, um in einem im Wesentlichen kreisförmigen Durchgangsloch (3) in einem Bord (2) montiert zu werden,
und der Ankerpunkt (1) Folgendes umfasst;
• eine Zurrseite, die ausgelegt ist, um den zu niederzurrenden Gegenständen zugewandt zu sein, und
• eine der Zurrseite entgegengesetzte Rückseite, wobei
der Ankerpunkt (1) Folgendes umfasst;
• eine im Wesentlichen kreisförmige Zurrplatte (4, 104), und
• ein axiales Fixiermittel (5, 105),
wobei die Zurrplatte (4, 104) mit Folgendem ausgerüstet ist;
• einer Öffnung (8, 108, 408), die zur Aufnahme eines Zurrhakens (10, 30) ausgelegt ist, und
• einem Flansch (6, 106), der zumindest teilweise außerhalb eines Randes (7) des im Wesentlichen kreisförmigen Durchgangslochs (3) herausragt,
und wobei das axiale Fixiermittel (5, 105) ausgelegt ist, um mit der Zurrplatte (4, 104) durch das Durchgangsloch (3) mechanisch befestigt zu werden, und zumindest ein Außenrand (11, 111) des axialen Fixiermittels (5, 105) ausgelegt ist, um zumindest teilweise außerhalb des Randes (7) des im Wesentlichen kreisförmigen Durchgangslochs (3) herauszuragen, wobei
• der Flansch (6, 106) ausgelegt ist, um außerhalb eines Randes (7) des im Wesentlichen kreisförmigen Durchgangslochs (3), an der Rückseite des Ankerpunktes (1), herauszuragen, und
• der Außenrand des axialen Fixiermittels (5, 105) ausgelegt ist, um außerhalb des Randes (7) des im Wesentlichen kreisförmigen Durchgangslochs (3), an der Rückseite des Ankerpunktes (1), herauszuragen, und
wobei die Zurrplatte (4, 104) derart topfförmig ist, dass die Öffnung (8, 108, 408) an der Zurrseite des Ankerpunktes (1) angeordnet ist, und die Zurrplatte (4, 104) mit einer Seitenwand (12, 112, 212) versehen ist, die sich zwischen der Rückseite und der Zurrseite des Ankerpunktes (1) erstreckt.

2. Ankerpunkt (1) nach Anspruch 1, wobei eine Höhe (hl) der Seitenwand (12, 112) im Wesentlichen gleich der Dicke (tb) des Bords (2) ist, und wobei die Seitenwand (12, 112) der Zurrplatte (4, 104) zu einer Wand des Durchgangslochs (3) im Wesentlichen parallel ist.

3. Ankerpunkt (1) nach einem der vorgehenden Ansprüche, wobei das axiale Fixiermittel eine Befestigungsplatte (5, 105) ist, und die Zurrplatte (4, 104) und die Befestigungsplatte (5, 105) durch Befestigungsmittel (14, 114) miteinander derart mechanisch befestigt werden können, dass, wenn der Ankerpunkt (1) in dem Bord (2) montiert ist, der Ankerpunkt (1) in dem Durchgangsloch (3) gesichert ist und die Zurrplatte (4, 104, 204) und die Befestigungsplatte (5, 105) zueinander ortsfest sind.

4. Ankerpunkt (1) nach Anspruch 3, wobei das Befestigungsmittel eine Bajonettfassung (14, 114) ist, und wobei die Bajonettfassung eine radiale Bajonettfassung (14) oder eine axiale Bajonettfassung (114) ist.

5. Ankerpunkt (1) nach Anspruch 3, wobei auch die Befestigungsplatte (5, 105) mit mindestens einer Seitenwand (15) versehen ist, die ausgelegt ist, um zur Seitenwand (12) der Zurrplatte (4) parallel zu sein, und wobei das Befestigungsmittel eine radiale Bajonettfassung (14) ist, die an den Seitenwänden (12, 15) der Zurrplatte (4) bzw. der Befestigungsplatte (5) angeordnet ist.

6. Ankerpunkt (1) nach Anspruch 5, wobei die Zurrplatte (4) mit dem weiblichen Teil der Bajonettfassung (14) mit Schlitzen (20, 21) in beiden Drehrichtungen versehen ist, wodurch die Schlitze (20) in einer ersten Drehrichtung den Ankerpunkt (1) an einem Bord (2) mit einer ersten Dicke montieren sollen und die Montierschlitze (21) in einer zweiten Drehrichtung den Ankerpunkt (1) an einem Bord (2) mit einer zweiten Dicke montieren sollen.

7. Ankerpunkt (1) nach einem der Ansprüche 3 - 6, wobei ein Fixierdübel (122) montiert ist, um die Position der Zurrplatte (104) und der Befestigungsplatte (105) relativ zueinander zu fixieren.

8. Ankerpunkt (1) nach einem der vorgehenden Ansprüche, wobei die Zurrplatte (4, 104) aus Metall, insbesondere Eisen oder einer Eisenlegierung, gefertigt ist.

9. Ankerpunkt (1) nach Anspruch 8, wobei das axiale Fixiermittel (5, 105) aus einem Material mit einer niedrigeren Strukturfestigkeit als dem des Materials der Zurrplatte (4, 104) gefertigt ist.

10. Ankerpunkt (1) nach einem der vorgehenden Ansprüche, wobei die Öffnung in der Zurrplatte eine kreisförmige Öffnung (8) oder eine Kleeblattöffnung (28) ist.

11. Ankerpunkt (1) nach einem der vorgehenden Ansprüche, wobei ein drehbares Fixiermittel (22) den Ankerpunkt (1) vor einer Drehung relativ zum Bord (2) sichert.

## Revendications

1. Point d'ancrage (1) pour arrimer des marchandises, telles que des véhicules, à bord de navires, dans lequel le point d'ancrage (1) est adapté pour être monté dans un trou traversant essentiellement circulaire (3) dans une planche (2),
et le point d'ancrage (1) comprend ;
• un côté d'arrimage adapté pour faire face aux marchandises à arrimer, et
• un côté arrière opposé au côté d'arrimage, dans lequel
le point d'ancrage (1) comprend en outre ;
• une plaque d'arrimage essentiellement circulaire (4, 104), et
• un moyen de fixation axiale (5, 105),
dans lequel la plaque d'arrimage (4, 104) est pourvue ;
• d'une ouverture (8, 108, 408), adaptée pour recevoir un crochet d'arrimage (10, 30), et
• d'une bride (6, 106), qui fait au moins partiellement saillie à l'extérieur d'un bord (7) d'un trou traversant essentiellement circulaire (3),
et dans lequel le moyen de fixation axiale (5, 105) est adapté pour être fixé mécaniquement avec la plaque d'arrimage (4, 104) à travers le trou traversant (3), et au moins un bord extérieur (11, 111) du moyen de fixation axiale (5, 105) est adapté pour faire saillie au moins partiellement à l'extérieur du bord (7) du trou traversant essentiellement circulaire (3), dans lequel
• la bride (6, 106) est adaptée pour faire saillie à l'extérieur d'un bord (7) du trou traversant essentiellement circulaire (3), au niveau du côté arrière du bord d'ancrage (1), et
• le bord extérieur du moyen de fixation axiale (5, 105) est adapté pour faire saillie à l'extérieur du bord (7) du trou traversant essentiellement circulaire (3), au niveau du côté d'arrimage du bord d'ancrage (1), et
dans lequel la plaque d'arrimage (4, 104) est en forme de cuvette, si bien que ladite ouverture (8, 108, 408) est agencée sur le côté d'arrimage du point d'ancrage (1) et la plaque d'arrimage (4, 104) est pourvue d'une paroi latérale (12, 112, 212) s'étendant entre le côté arrière et le côté d'arrimage du point d'ancrage (1).

2. Point d'ancrage (1) selon la revendication 1, dans lequel une hauteur (hl) de ladite paroi latérale (12, 112) est essentiellement égale à l'épaisseur (tb) de la planche (2), et dans lequel ladite paroi latérale (12, 112) de la plaque d'arrimage (4, 104) est essentiellement parallèle à une paroi du trou traversant (3).

3. Point d'ancrage (1) selon l'une quelconque des revendications précédentes, dans lequel le moyen de fixation axiale est une plaque de fixation (5, 105) et la plaque d'arrimage (4, 104) et la plaque de fixation (5, 105) peuvent être fixées mécaniquement l'une avec l'autre avec des moyens de fixation (14, 114) si bien que, lorsque le point d'ancrage (1) est monté dans la planche (2), le point d'ancrage (1) est fixé dans le trou traversant (3) et la plaque d'arrimage (4, 104, 204) et la plaque de fixation (5, 105) sont fixes l'une par rapport à l'autre.

4. Point d'ancrage (1) selon la revendication 3, dans lequel le moyen de fixation est une monture à baïonnette (14, 114), et dans lequel la monture à baïonnette est une monture à baïonnette radiale (14) ou une monture à baïonnette axiale (114).

5. Point d'ancrage (1) selon la revendication 3, dans lequel la plaque de fixation (5, 105) comprend également au moins une paroi latérale (15) adaptée pour être parallèle à la paroi latérale (12) de la plaque d'arrimage (4), et dans lequel le moyen de fixation est une monture radiale à baïonnette (14) située sur les parois latérales (12, 15) respectivement de la plaque d'arrimage (4) et de la plaque de fixation (5).

6. Point d'ancrage (1) selon la revendication 5, dans lequel la plaque d'arrimage (4) avec la partie femelle de la monture à baïonnette (14) est munie de fentes (20, 21) dans les deux sens de rotation, les fentes (20) situées dans un premier sens de rotation devant monter le point d'ancrage (1) sur une planche (2) d'une première épaisseur, et les fentes de montage (21) situées dans un deuxième sens de rotation devant monter le point d'ancrage (1) sur une planche (2) avec une deuxième épaisseur.

7. Point d'ancrage (1) selon l'une quelconque des revendications 3 à 6, dans lequel un bouchon de fixation (122) est monté pour fixer la position de la plaque d'arrimage (104) et de la plaque de fixation (105) l'une par rapport à l'autre.

8. Point d'ancrage (1) selon l'une quelconque des revendications précédentes, dans lequel la plaque d'arrimage (4, 104) est en métal, en particulier en fer ou en un alliage de fer.

9. Point d'ancrage (1) selon la revendication 8, dans lequel le moyen de fixation axiale (5, 105) est constitué d'un matériau ayant une résistance structurelle inférieure à celle du matériau de la plaque d'arrimage (4, 104).

10. Point d'ancrage (1) selon l'une quelconque des revendications précédentes, dans lequel l'ouverture dans la plaque d'arrimage est une ouverture circulaire (8) ou une ouverture de feuille de trèfle (28).

11. Point d'ancrage (1) selon l'une quelconque des revendications précédentes, dans lequel un moyen de fixation en rotation (222) maintient le point d'ancrage (1) en rotation par rapport à la planche (2).
